(19) **Europäisches Patentamt**
**European Patent Office**
**Office européen des brevets**

(11) **EP 2 130 129 B1**

(12) **EUROPEAN PATENT SPECIFICATION**

(45) Date of publication and mention
of the grant of the patent:
**19.12.2012 Bulletin 2012/51**

(51) Int Cl.:
***G06F 13/38*** (2006.01)     ***G06F 11/16*** (2006.01)
***G06F 3/06*** (2006.01)

(21) Application number: **08729803.0**

(22) Date of filing: **14.02.2008**

(86) International application number:
**PCT/US2008/053895**

(87) International publication number:
**WO 2008/101040 (21.08.2008 Gazette 2008/34)**

(54) **SYSTEM AND METHOD FOR INCREASING VIDEO SERVER STORAGE BANDWIDTH**

SYSTEM UND VERFAHREN ZUR ERHÖHUNG DER SPEICHERBANDBREITE EINES
VIDEOSERVERS

SYSTÈME ET PROCÉDÉ PERMETTANT D'AUGMENTER LA BANDE PASSANTE DE MÉMOIRE
D'UN SERVEUR VIDÉO

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **15.02.2007 US 675556**

(43) Date of publication of application:
**09.12.2009 Bulletin 2009/50**

(73) Proprietor: **Harris Corporation
Melbourne, FL 32919 (US)**

(72) Inventors:
• **PETRESCU, Mihai G.
Schwenksville, PA 19473-2059 (US)**

• **ROTH, Todd S.
Shadow Hills, CA 91040 (US)**
• **CREVE, Hilton S.
Culver City, CA 90230 (US)**
• **TRAN, Tung M.
West Hills, CA 91304 (US)**

(74) Representative: **Schmidt, Steffen J.
Wuesthoff & Wuesthoff
Patent- und Rechtsanwälte
Schweigerstrasse 2
81541 München (DE)**

(56) References cited:
**US-A- 5 568 629     US-A1- 2002 103 969
US-B1- 6 275 898     US-B1- 6 895 485**

**Description**

Magnetic disks have largely supplanted video tape as the storage medium of choice. Currently large volumes of random access storage may be provided in a video server by hard disk drives. Each hard drive includes one or more disks mounted on a common axle driven by a motor. Each disk may include thousands of circular tracks in which data can be stored. The tracks are provided in a storage area that extends from an inner circular edge at about 1/4 of the radius of the disk to the outer circular edge of the disk. A respective read/write head for each side of each disk may be mounted on one of the branches of a common comb-shaped carrier typically referred to as a comb. The comb is turned by a motor called an actuator to move the heads radially thereby positioning the heads above one of a multitude of tracks on the disk to access (read or write) information from a selected track. When the heads are in position to access information on a track then each of the heads on the comb is in position to access a respective track on a respective side of a disk without further substantial movement of the comb. The tracks on respective sides of the disks are typically referred to as a cylinder.

Generally in current video servers, plural multimedia programs may be stored in a redundant array of independent disks (RAID) type storage system. During data storage, a respective portion of a file is stored in each of the other hard drives in a round robin manner, and then a parity portion is calculated and stored in a parity or redundant drive. Round robin is a method of taking turns during repeated access cycles in which each unit gets one turn in each turn cycle, and the units take turns in the same order during each turn cycle. Storing consecutive portions of the same file in multiple drives in a round robin manner is known in the art as data striping. If any one drive in the RAID system fails during a read, then all the information will automatically be available by processing the information from the remaining drives.

United States Patent 6,895,485 discloses an ad hoc system in which a controller allocates storage to logical volumes depending upon the requirements for the respective logical volume. This controller allocates such that logical volumes may be allocated across storage devices within the storage array devices such that performance requirements for the logical volumes are met. United States Patent Application Publication US 2002/0103969 discloses allocating logical volumes such that the logical volumes span multiple physical disk drives. United States Patent 5,568,629 discloses partitioning in which logical storage units are allocated from physical storage units of disk arrays and the individual drives may be partitioned within the logical storage units. United States Patent 6,275,898 discloses allocating logical volumes across disk drives, and is drawn to transitioning between RAID levels of logical volume allocations spanning the disk drives.

The files for a multimedia program generally include at least one video file, at least one audio file, and multiple control files. The video files for a one hour program, even in a highly compressed format, generally require several gigabytes of storage, and typically many cylinders are required for each video program. Typical multimedia data servers are able to simultaneously provide multiple program streams. That is, the streams of several programs may be input and/or output simultaneously on several independent channels. This requires simultaneous disk access to multiple files. In this scheme several files are repeatedly accessed over short periods of time. The comb moves at high speeds back and forth between the tracks for the required files as short portions of each file are sequentially accessed.

By definition, a broadcast video server must base all channel capacity calculations on a worst-case system loading. Generally, channel capacity may be defined as:

$$\text{Channel capacity} = (\text{Storage bandwidth}) / (\text{Channel data rate}) \quad (1)$$

Therefore, a twelve channel server must support twelve simultaneous independent channels. Similarly, a 120 channel server must support 120 simultaneous channels, and so on. Whether the same media is playing back in all channels, or different media in each channel, performance and quality-of-service (QoS) must be guaranteed. Furthermore, whether all drives are functioning, or one or two drives fail, performance and QoS must still be guaranteed.

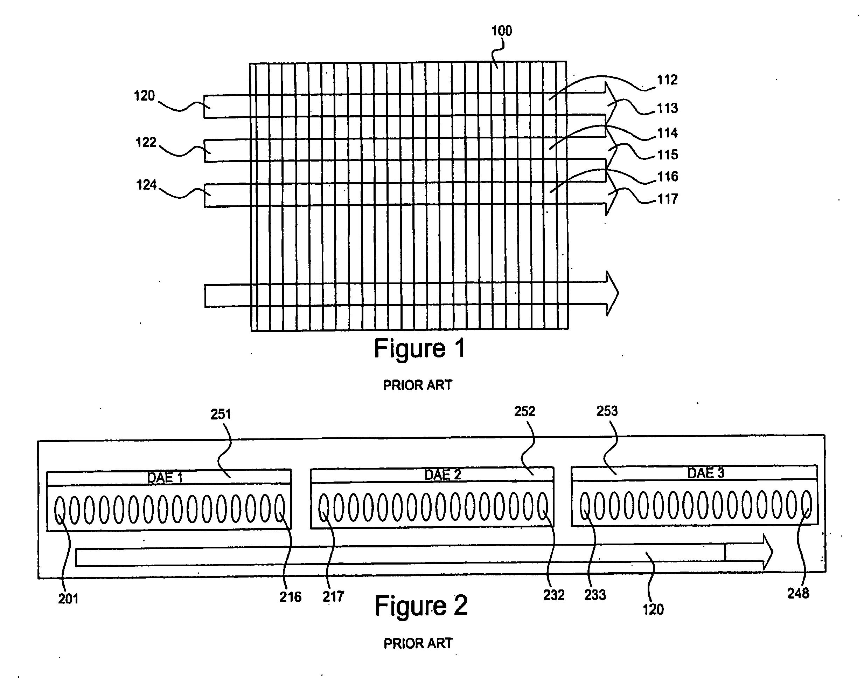

Traditional storage area network (SAN) design has developed around the concept of the RAID set and its associated "aggregate" bandwidth. This aggregate storage system bandwidth is created by striping data across individual drives. Figures 1 and 2 are representations showing prior art data striping and bandwidth aggregation. With reference to Figure 1, data striping involves breaking media files 100 down into data blocks and calculating parity. Depending upon the data protection strategy, either single, as in RAID level 3, or multiple parities may be calculated. Contiguous data 112, 114, 116 and associated parity blocks 113, 115, 117 are organized into data stripes 120, 122, 124 such that the total number of blocks is equal to the number of drives in a RAID set. Calculating optimal block size to optimize data transfer performance is necessary; for example, too small is inefficient, too large unwieldy. With reference to Figure 2, a data stripe 120 may then be written across all the drives constituting the RAID set. As illustrated in Figure 2, drives 201 through 216 are located on a first physical drive chassis or DAE1 251, drives 217 through 232 are located on DAE2 252, and drives 233 through 248 are located on DAE3 253. This data striping process allows each drive to contribute in an additive manner to both the capacity and the bandwidth of the aggregate logical volume by the following relationship:

$$\text{Logical volume} = (\text{RAID set}) - (\# \text{ drives}) \quad (2)$$

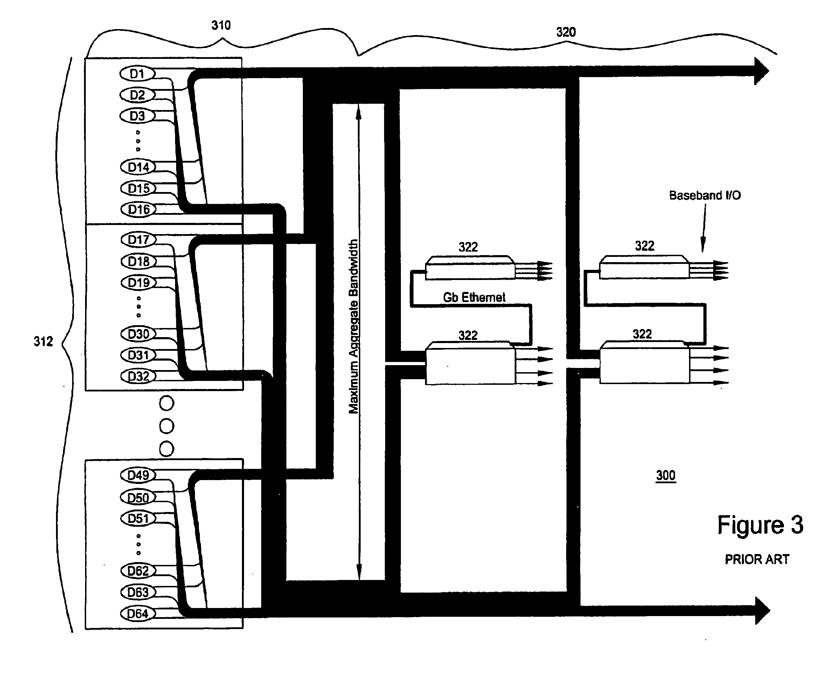

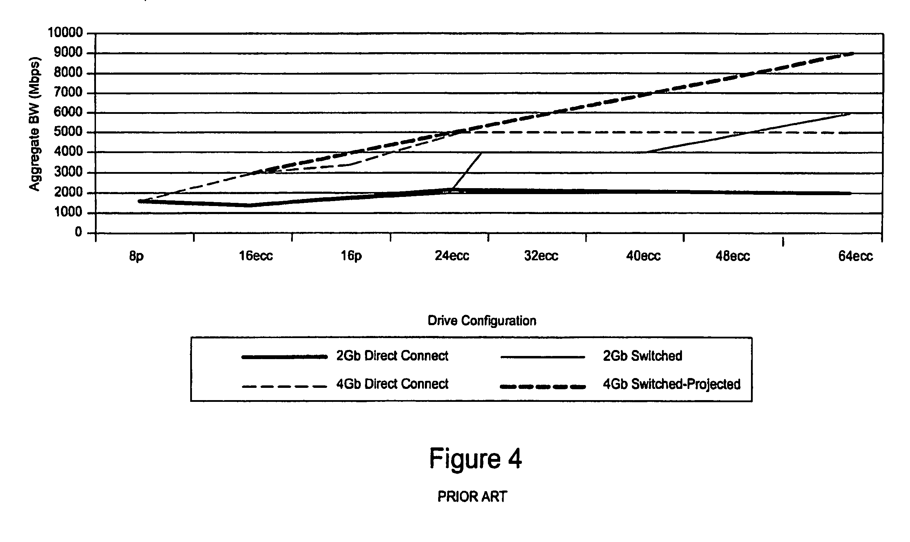

Non-interruptive expansion may be limited by increasing the storage capacity through additional RAID sets. RAID set bandwidth generally may be expanded by increasing the number of member drives in each set, a process requiring adding drives to the array and re-striping data. Through the integration of data-striping, advanced RAID calculation (Error Correction Checking (ECC) parity) and a media-oriented file system may be realized in a distributed software environment. Figure 3 is a prior art media delivery system. With reference to Figure 3, a prior art media delivery system 300 provides a SAN for a real-time broadcast environment. System bandwidth is aggregated 310 in the SAN 312, and bandwidth is distributed and shared 320 across all connected host servers 322. For example, data striping occurring across drives D1 through D64 builds SAN bandwidth. The total SAN bandwidth may then be divided among the host servers 322 whereby network access arbitration may be managed to ensure bandwidth availability and deterministic performance. Any residual bandwidth may be utilized for Serial Data Interface (SDI) Input/Output expansion and/or external connectivity. For example, a system designed to have a 4 Gbps aggregate bandwidth is not created by connecting four 1 Gbps systems together; rather, each piece of media on the SAN has 4 Gbps shared access. Figure 4 is a graphical illustration of storage bandwidth versus drive configuration in prior art SAN Fiber Channel infrastructures. With reference to Figure 4, as systems transition from a 2 Gbps to 4 Gbps Fiber Channel infrastructure, the maximum aggregate bandwidth increases from 4 to 6 Gbps (based on a 48 drive ECC RAID set). Thus, 6 Gbps of bandwidth may only support 100 channels of compressed high definition (HD) media (60Mb MPEG2); however, real-time broadcasting may require systems with hundreds of real-time channels.

Thus, with the adoption of HD broadcasting and its commensurate requirement for increased storage capacity and bandwidth, the need for scalability has increased. By applying the latest advances in the deterministic performance and dual-ported redundancy of Fibre Channel (a gigabit speed network technology for storage networks) larger, more capable and redundant systems must be built to meet the needs of the media industry. Therefore, a need exists in the art for a system and method for increasing video server storage bandwidth.

Accordingly, there is a need for a method and apparatus for a novel method and system that would overcome the deficiencies of the prior art. Therefore, an embodiment of the present subject matter provides a novel method for storing data in a data storage system. The method comprising the steps of providing a data storage system having a plurality of hard disk drive units each of which includes a plurality of hard disk storage devices and forming a first logical volume for storing data such that the first logical volume includes a first set of the hard disk storage devices for each of the hard disk drive units. A second logical volume for storing data may be formed such that the second logical volume includes a second set of the hard disk storage devices for each of the hard disk drive units. A first data set may be stored in the first logical volume, and a second data set may be stored in the second logical volume, wherein the first and second set of hard disk storage devices are mutually exclusive. An alternative embodiment of the present subject matter may further include the steps of arranging the first set of hard disk storage devices into a first redundant array of independent disks and arranging the second set of hard disk storage devices into a second redundant array of independent disks.

Another embodiment of the present subject matter provides a novel data storage system. The data storage system includes a plurality of hard disk drive units each of which includes a plurality of hard disk storage devices and a controller which segregates a portion of an aggregate storage volume of the data storage system. The aggregate storage volume may be segregated into a first logical volume for storing data such that the first logical volume includes a first set of the hard disk storage devices for each of the hard disk drive units, and a second logical volume for storing data such that the second logical volume includes a second set of said hard disk storage devices for each of the hard disk drive units, wherein the first and second set of hard disk storage devices are mutually exclusive. The system further comprises a first writing circuit for storing a first data set in the first logical volume and a second writing circuit for storing a second data set in the second logical volume. An additional embodiment of the present subject matter may further include a second data storage system operatively connected to the first storage system to provide back-up storage capacity to the first data storage system. In an alternative embodiment, the controller may be replaced by a first controller and a second controller. The first controller segregates a first portion of an aggregate storage volume of the data storage system into the first logical volume for storing data such that the first logical volume includes the first set of the hard disk storage devices for each of the hard disk drive units. The second controller segregates a second portion of the aggregate storage volume of the data storage system into the second logical volume for storing data such that the second logical volume includes said second set of the hard disk storage devices for each of the hard disk drive units, wherein said first and second set of hard disk storage devices are mutually exclusive.

These embodiments and many other objects and advantages thereof will be readily apparent to one skilled in the art to which the invention pertains from a perusal of the claims, the appended drawings, and the following detailed description of the embodiments.

The invention is defined according to the method of claim 1 and the system of claim 7.

Figure 1 is a representation showing prior art data striping and bandwidth aggregation.
Figure 2 is a representation showing prior art data striping and bandwidth aggregation.
Figure 3 is a prior art media delivery system.
Figure 4 is a graphical illustration of storage bandwidth versus drive configuration in prior art SAN Fiber Channel infrastructures.
Figure 5 is a data storage system according to an embodiment of the present subject matter.
Figure 6 is a data storage system according to another embodiment of the present subject matter.
Figure 7 is a data storage system according to an alternative embodiment of the present subject matter.
Figure 8 is a data storage system according to a further embodiment of the present subject matter.
Figure 9 is a flowchart illustrating a method for storing data in a data storage system according to an embodiment of the present subject matter.
Figure 10 is a representation of the data storage redundancy capabilities of embodiments of the present subject matter.

With reference to the figures where like elements have been given like numerical designations to facilitate an understanding of the present subject matter, the various embodiments of a system and method for increasing video server storage bandwidth are herein described.

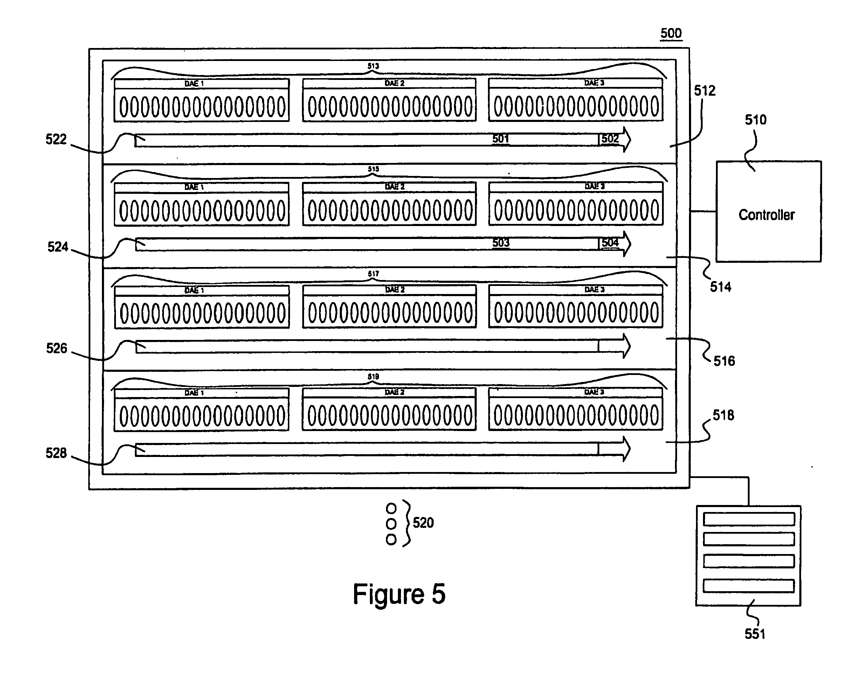

Figure 5 is a data storage system according to an embodiment of the present subject matter. With reference to Figure 5, a data storage system 500 is shown having a plurality of hard disk drive units each including a plurality of hard disk drives. Exemplary data storage systems may include, but are not limited to, a storage area network (SAN) or other known storage systems and/or combinations thereof. The system 500 includes a controller 510 that segregates a portion of an aggregate storage volume of the system 500 into a first logical volume 512 and a second logical volume 514. An exemplary controller 510 may be, but is not limited to, a software application. In an alternative embodiment of the present subject matter, the controller 510 may be substituted for plural controllers, e.g., a first and second controller, that segregate portions of the aggregate storage volume of the data storage system 500 into the logical volumes wherein the respective sets of hard disk storage devices are mutually exclusive. Of course, the aggregate storage volume may be segregated into additional logical volumes such as a third logical volume 516, a fourth logical volume 518, and/or a plurality of additional logical volumes 520.

The first logical volume 512 may include a first set 513 of hard disk storage devices for each of a plurality of hard disk drive units DAE1, DAE2, DAE3. The first set 513 of hard disk storage devices comprises storage devices 1 through 16 included on DAE1, storage devices 17 through 32 included on DAE2 and storage devices 33 through 48 included on DAE3. The first set 513 of storage devices may comprise a first RAID set. The second logical volume 514 includes a second set 515 of hard disk storage devices for each of its respective plurality of hard disk drive units DAE1, DAE2, DAE3. The second set 515 of hard disk storage devices comprises storage devices l through 16, 17 through 32 and 33 through 48 included on DAE1, DAE2 and DAE3, respectively. The first set 513 and the second set 515 of hard disk storage devices are mutually exclusive of one another. The second set 515 of storage devices may comprise a second RAID set. Of course, additional sets 517, 519 of hard disk storage devices may be included corresponding to the respective third logical volume 516 and fourth logical volume 518, and the additional sets 517, 519 of storage devices may comprise further RAID sets.

The system 500 may also include a first writing circuit (not shown) for storing a first data set 522 in the first logical volume 512 and a second writing circuit (not shown) for storing a second data set 524 in the second logical volume 514. Both the first data set 522 and second data set 524 may include a portion comprising data bits 501, 503 and a portion comprising parity bits 502, 504. The parity bits 502, 504 may also include bits from an error correcting code (ECC). Of course, additional writing circuits may be included in the system 500 for storing additional data sets 526, 528 corresponding to the respective logical volumes 516, 518. Any of the data sets in the system may include information bits from a video stream, audio stream, and/or control files. The hard disk storage devices included in the system 500 may store data sets magnetically, optically, in flash memory, or by another storage means. An additional embodiment of the present subject matter may further include a second data storage system 550 operatively connected to the first storage system 500. The second data storage system 550 may provide back-up storage capacity to the first data storage system 500.

For example, in a system having a high bandwidth requirement, the bandwidth may be increased by interleaving data stripes 522, 524, 526, 528 across multiple RAID sets 513, 515, 517, 519. This interleaving creates a logical volume having an effective bandwidth and capacity equal to the sum of the member RAID sets. Thus, for a system including 4 RAID sets, each set including 48 drives, the bandwidth would be 24Gbps. Therefore, embodiments of the present subject matter may thus increase the total available bandwidth (and commensurately server channel capacity) and improve expandability of a system or network without sacrificing redundancy or reliability. Further, logical volumes may be added to embodiments of the present subject matter to increase total system capacity up to, but not limited to, 8192 terabytes.

Embodiments of the present subject matter also allow non-interruptive expansion of both capacity and bandwidth. For example, the logical volume may be expanded by dynamically adding additional member RAID sets. Thus, new media may be distributed across all member RAID sets, and existing media may be redistributed across the additional member sets as a background operation. With regard to reliability, if embodiments of the present subject matter suffer double data errors in member RAID sets, performance will not be impacted and media loss will not occur. For example, the parity proportions of the data sets may be maintained and the logical volumes may survive drive data errors equal to two times the number of member RAID sets.

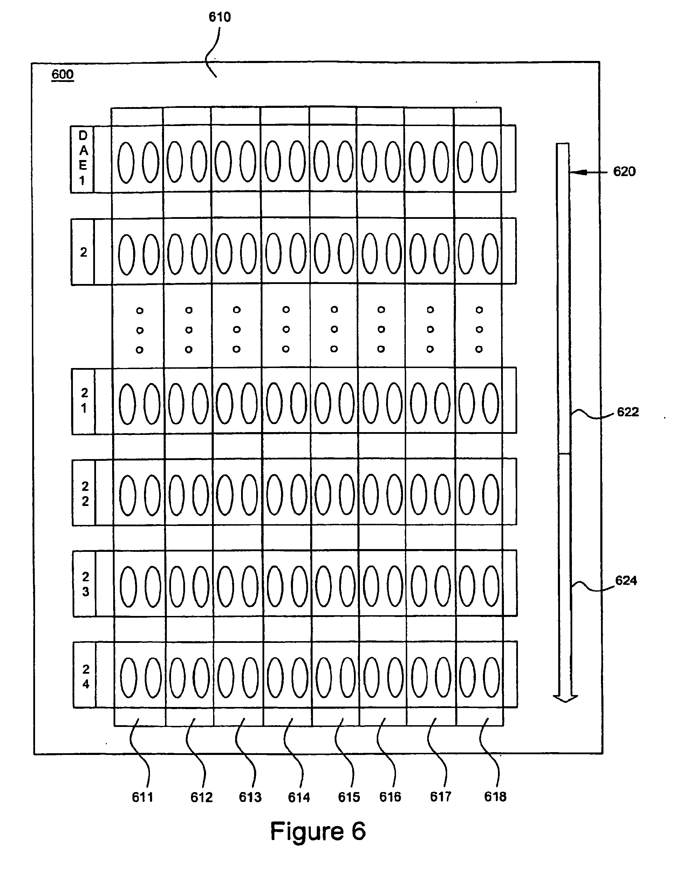

Figure 6 is a data storage system according to another embodiment of the present subject matter. While traditional data striping arrangements are generally collinear to the physical drive chassis (DAEs), embodiments of the present subject matter may create a higher bandwidth logical volume by arranging the sets of storage devices perpendicular to the DAEs. With reference to Figure 6, a data storage system 600 is shown having a plurality of hard disk drive units each including a plurality of hard disk drives. The system 600 may include a controller (not shown) that segregates a portion of an aggregate storage volume of the system 600 into at least one logical volume 610. While one logical volume is illustrated, plural logical volumes may be included in the system 600 and such an example is not intended to limit the scope of the claims appended herewith. The logical volume 610 may include a first set 611, second set 612, ..., seventh set 617, and eighth set 618 of hard disk storage devices arranged perpendicularly to each of a plurality of hard disk drive units DAE1, DAE2, ..., DAE23, DAE24. While portions of the sets of hard disk storage devices are included on each of the plural hard disk drive units, the sets of hard disk storage devices are mutually exclusive of one another. Of course, the sets of storage devices may comprise RAID sets.

The system 600 may also include one or plural writing circuits (not shown) for storing data sets in the logical volume 610. Any portion of the data set 620 may include a portion comprising data bits 622 and a portion comprising parity bits 624. The parity bits may also include bits from an error correcting code (ECC). Any of the data sets in the system may include information bits from a video stream, audio stream, and/or control files, and the hard disk storage devices included in the system 600 may store data sets magnetically, optically, in flash memory, or by another storage means. Additional data storage systems (not shown) may be operatively connected to the system 600 to provide back-up storage capacity.

Through the perpendicular relationship of the hard disk storage devices or RAID sets and the DAEs of the data storage system 600, higher bandwidth may be realized. This arrangement creates a logical volume having an effective bandwidth and capacity equal to the sum of the member RAID sets. Thus, for a system including 8 RAID sets, each set including 48 drives, the bandwidth would be 48 Gbps. Furthermore, the system 600 exhibits an improved redundancy. For example, an entire drive chassis or DAE may fail without losing media or degrading system performance. That is, because two drives to each RAID set dwell on a given DAE, an entire DAE failure may represent a correctable double data error on each RAID set. In an alternative embodiment of the present subject matter employing ECC-2 parity, 8 RAID sets may be created to utilize all drive slots. Embodiments of the present subject matter may also allow non-interruptive expansion of both capacity and bandwidth. For example, the logical volume may be expanded by adding additional member RAID sets. Thus, new media may be distributed across all member RAID sets, and existing media may be redistributed across the additional member sets. Additional logical volumes may be added to embodiments of the present subject matter to increase total system capacity up to, but not limited to, 8192 terabytes.

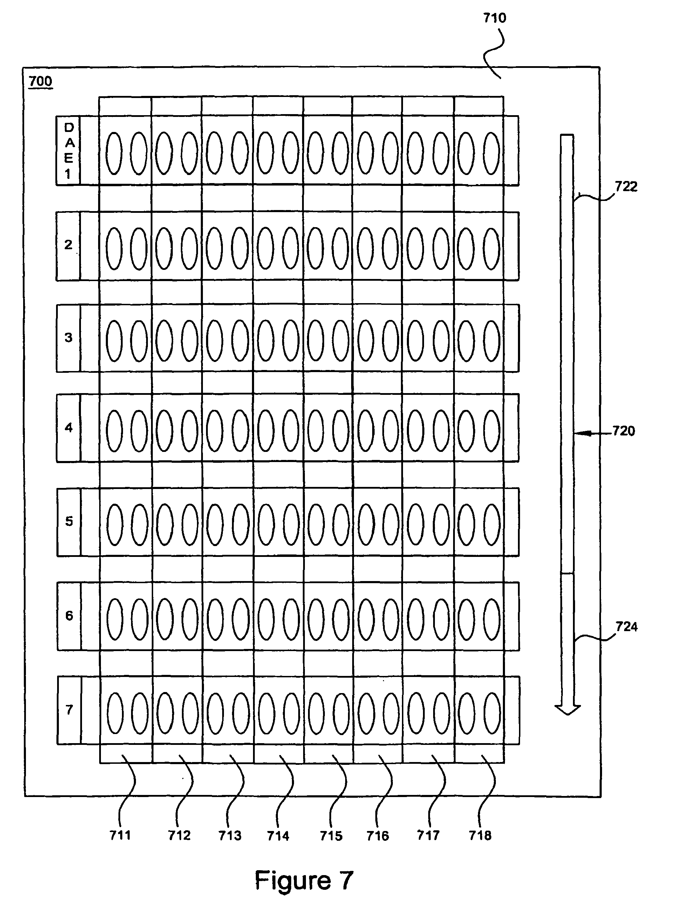

Figure 7 is a data storage system according to an alternative embodiment of the present subject matter. With reference to Figure 7, a data storage system 700 is shown having a plurality of hard disk drive units each including a plurality of hard disk drives. The system 700 may include a controller (not shown) that segregates a portion of an aggregate storage volume of the system 700 into at least one logical volume 710. While one logical volume is illustrated, plural logical volumes may be included in the system 700 and such an example is not intended to limit the scope of the claims appended herewith. The logical volume 710 may include plural sets 711 through 718 of hard disk storage devices arranged perpendicularly to each of a plurality of hard disk drive units DAE I through DAE7. While portions of the sets of hard disk storage devices are included on each of the plural hard disk drive units, the sets of hard disk storage devices are mutually exclusive of one another. Of course, the sets of storage devices may comprise RAID sets. The data storage system 700 illustrates a smaller capacity system having 112 drives. Of course, the system 700 may also include one or plural writing circuits (not shown) for storing a data set 720 in the logical volume 710, and any portion of the data set 720 may include a portion comprising data bits 722 and a portion comprising parity bits 724. The parity bits may also include bits from an ECC. Any of the data sets in the system may include information bits from a video stream, audio stream, and/or control files, and the hard disk storage devices included in the system 700 may store data sets magnetically, optically, in flash memory, or by another storage means. Additional data storage systems may be operatively connected to the system 700 to provide back-up storage capacity.

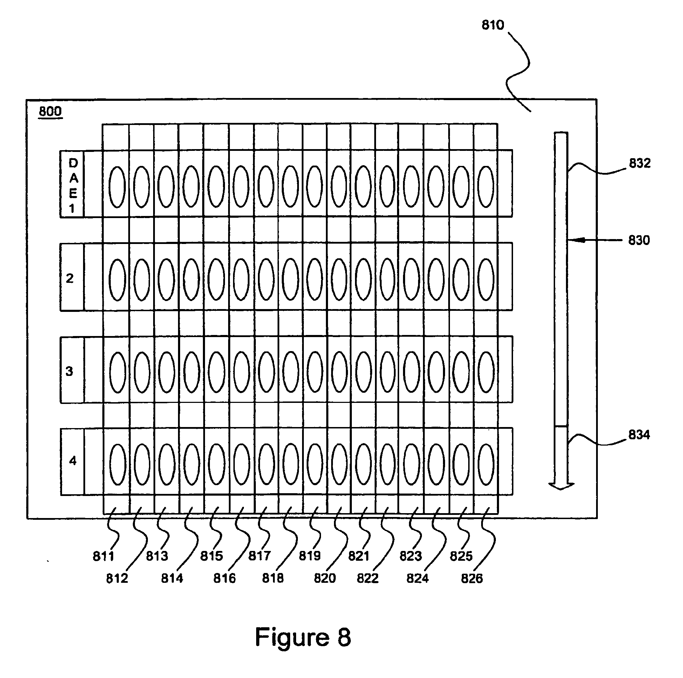

Figure 8 is a data storage system according to a further alternative embodiment of the present subject matter. With reference to Figure 8, a data storage system 800 is shown having a plurality of hard disk drive units each including a plurality of hard disk drives. The system 800 may include a controller (not shown) that segregates a portion of an aggregate storage volume of the system 800 into at least one logical volume 810. While one logical volume is illustrated, plural logical volumes may be included in the system 800 and such an example is not intended to limit the scope of the claims appended herewith. The logical volume 810 may include plural sets 811 through 826 of hard disk storage devices arranged perpendicularly to each of a plurality of hard disk drive units DAE1 through DAE4. While portions of the sets of hard disk storage devices are included on each of the plural hard disk drive units, the sets of hard disk storage devices are mutually exclusive of one another. The sets of storage devices may comprise RAID 3 sets. The data storage system 800 illustrates a smaller capacity system having 64 drives. Of course, the system 800 may also include one or plural writing circuits (not shown) for storing a data set 830 in the logical volume 810, and any portion of the data set 830 may include a portion comprising data bits 832 and a portion comprising parity bits 834. The parity bits may also include bits from an ECC. Any of the data sets in the system may include information bits from a video stream, audio stream, and/or control files, and the hard disk storage devices included in the system 800 may store data sets magnetically, optically, in flash memory, or by another storage means. Additional data storage systems may be operatively connected to the system 800 to provide back-up storage capacity.

Additional embodiments of the present subject matter may employ ECC-3, i.e., triple data error correcting. ECC-3 allows embodiments of the present subject matter utilizing perpendicular data striping to lose an entire DAE plus an additional drive with an increase in parity drive overhead. Further embodiments of the present subject matter may also employ RAID 6 to thus reduce parity overhead while retaining double error correction with a corresponding increase in computational overhead.

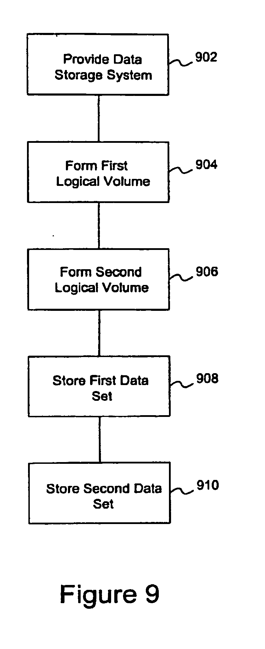

Figure 9 is a flowchart illustrating a method for storing data in a data storage system according to an embodiment of the present subject matter. With reference to Figure 9, in step 902, a data storage system is provided having a plurality of hard disk drive units each including a plurality of hard disk storage devices. An exemplary data storage system may include, but is not limited to, a storage area network (SAN) or other known storage system and/or combination thereof. In step 904, a first logical volume is formed for storing data. The first logical volume may include a first set of the hard disk storage devices for each of the hard disk drive units. In step 906, a second logical volume is formed for storing data. The second logical volume may include a second set of the hard disk storage devices for each of the hard disk drive units, wherein the first and second set of hard disk storage devices are mutually exclusive. In step 908, a first data set may be stored in the first logical volume. In step 910, a second data set may be stored in the second logical volume. Both the first data set and second data set may include a portion comprising data bits and a portion comprising parity bits. The parity bits may also include bits from an error correcting code. Any of the data sets may include information bits from a video stream, audio stream, and/or control files. The hard disk storage devices may store the data sets magnetically, optically, in flash memory, or by another storage means Further embodiments of the present subject matter may include arranging the first and second set of hard disk storage devices into first and second RAID sets, respectively.

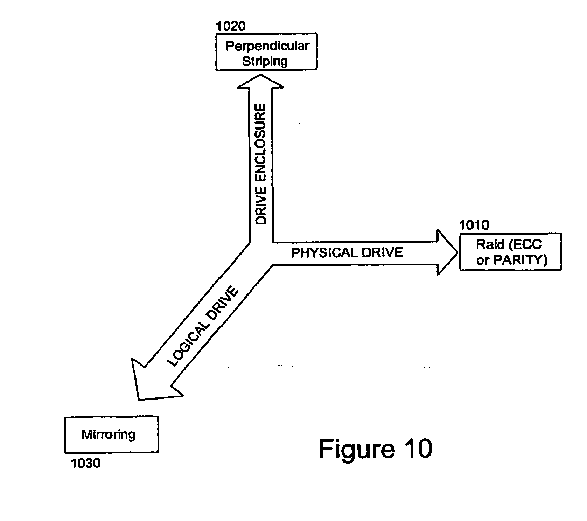

Figure 10 is a representation of the data storage redundancy capabilities of embodiments of the present subject matter. With reference to Figure 10, reliability of data storage systems according to the present subject matter may be separated into three independent axes: RAID 1010 (ECC or parity) which eliminates a physical hard drive as a single point failure (SPF); Orthogonal data striping 1020 which eliminates drive and enclosure subsystems as an SPF; and mirroring 1030 which eliminates an entire logical volume as an SPF. The independent nature of the three axes allows them to be combined and tiered. Thus, data storage systems according to embodiments of the present subject matter may employ any one or combination of the three axes to improve reliability, bandwidth, redundancy and storage capacity of a data storage system.

A system according to one embodiment of the present subject matter comprises a data storage system including a plurality of hard disk drive units each of which includes a plurality of hard disk storage devices and a controller which segregates a portion of an aggregate storage volume of the data storage system. The aggregate storage volume may be segregated into a plurality of logical volumes for storing data. For example, the aggregate storage volume may be segregated into a first logical volume for storing data such that a first logical volume includes a first set of the hard disk storage devices for each of the hard disk drive units, and a second logical volume includes a second set of said hard disk storage devices for each of the hard disk drive units, wherein the first and second set of hard disk storage devices are mutually exclusive. The system may also comprise plural writing circuits for storing data sets in the logical volumes. For example, a first writing circuit may be provided for storing a first data set in the first logical volume and a second writing circuit provided for storing a second data set in the second logical volume. An alternative embodiment may include a second data storage system operatively connected to the first storage system to provide back-up storage capacity. Further embodiments may substitute the controller by plural controllers.

A method according to another embodiment of the present subject matter may comprise.the steps of providing a data storage system having a plurality of hard disk drive units each of which includes a plurality of hard disk storage devices and forming a first logical volume for storing data such that the first logical volume includes a first set of the hard disk storage devices for each of the hard disk drive units. The method further comprises forming a second logical volume for storing data such that the second logical volume includes a second set of the hard disk storage devices for each of the hard disk drive units, wherein the first and second set of hard disk storage devices are mutually exclusive. A first data set may be stored in the first logical volume, and a second data set may be stored in the second logical volume. Additional embodiments of the present subject matter may include the steps of arranging the first set of hard disk storage devices into a first RAID set and arranging the second set of hard disk storage devices into a second RAID set.

As shown by the various configurations and embodiments illustrated in Figures 1-10, a method and system for increasing video server storage bandwidth have been described.

**Claims**

1. A method for storing data in a data storage system, the method comprising the steps of:

   providing (902) a data storage system (500, 600, 700, 800) having a plurality of hard disk drive units (DAE1 ... DAE24), each of which hard disk drive units (DAE1 ... DAE24) includes a plurality of hard disk storage devices (1-16, 17-32, ...);
   forming (904) a first logical volume (512) being a first plurality of redundant arrays of independent disks - RAID - for storing a first data set (522) such that said first logical volume (512) includes a first RAID set (513) of said hard disk storage devices (1-16, 17-32, ...) for each of said hard disk drive units (DAE1 ... DAE24);
   forming (906) a second logical volume (514) being a second plurality of redundant arrays of independent disks - RAID - for storing a second data set (524) **characterized in that** said second logical volume (514) includes a second RAID set (515) of said hard disk storage devices (1-16, 17-32, ...) for each of said hard disk drive units (DAE1 ... DAE24);
   storing (908) said first data set (522) in said first logical volume (512); and
   storing (910) said second data set (524) in said second logical volume (514), and wherein said first RAID set (513) and second RAID set (515) of hard disk storage devices (1-16, 17-32, ...) are mutually exclusive, and wherein
   said first and second data sets (522, 524) are interleaved across said first and second RAID sets (513, 515), said hard disk drive units (DAE1 ... DAE24) and said RAID sets (513, 515) have a perpendicular relationship, and each logical volume (512, 514) has a resulting effective bandwidth and capacity equal to the sum of the member RAID sets (513, 515).

2. The method of Claim 1 further comprising the steps of:

   arranging said first set of hard disk storage devices into a first redundant array of independent disks; and
   arranging said second set of hard disk storage devices into a second redundant array of independent disks.

3. The method of Claim 1 wherein said first data set includes a first portion comprising data bits and a second portion comprising parity bits.

4. The method of Claim 1 wherein said first data set includes information bits from a video stream.

5. The method of Claim 1 wherein said hard disk storage devices store said first data set magnetically, optically or in flash memory.

6. The method of Claim 1, wherein said first data set (522) is striped across the first logical volume (512) and said second data set (524) is striped across the second logical volume (514).

7. A data storage system, comprising:

   a data storage system (500) having a plurality of hard disk drive units (DAE1 ... DAE24), each of which hard disk drive units (DAE1 ... DAE24) includes a plurality of hard disk storage devices (1-16, 17-32, ...);
   a controller (510) which segregates a portion of an aggregate storage volume of said data storage system into:
   (a) a first logical volume (512) being a first plurality of redundant arrays of independent disks - RAID - for storing a first data set (522) such that said first logical volume (512) includes a first set of said hard disk storage devices (1-16, 17-32, ...) for each of said hard disk drive units (DAE1 ... DAE24), and
   (b) a second logical volume (514) being a second plurality of redundant arrays of independent disks - RAID - for storing a second data set (524) **characterized in that** said second logical volume (514) includes a second RAID set of said hard disk storage devices (1-16, 17-32, ...) for each of said hard disk drive units (DAE1 ... DAE24),

wherein said first RAID set (513) and second RAID set (515) of hard disk storage devices (1-16, 17-32, ...) are mutually exclusive;

a first writing circuit for storing a first data set in said first logical volume; and

a second writing circuit for storing a second data set in said second logical volume;

wherein

said first and second data sets (522, 524) are interleaved across said first and second RAID sets (513, 515), said hard disk drive units (DAE1 ... DAE24) and said RAID sets (513, 515) have a perpendicular relationship, and each logical volume (512, 514 has a resulting effective bandwidth and capacity equal to the sum of the member RAID sets (513, 515).

8. The system of Claim 7 wherein said first set of hard disk storage devices comprise a first redundant array of independent disks and said second set of hard disk storage devices comprise a second redundant array of independent disks.

9. The system of Claim 7 wherein said first data set includes a first portion comprising data bits and a second portion comprising parity bits.

10. The system of Claim 7 wherein said controller is replaced by:

(a) a first controller which segregates a first portion of an aggregate storage volume of said data storage system into said first logical volume (512) being a first plurality of redundant arrays of independent disks - RAID - for storing a first data set (522) such that said first logical volume (512) includes said first set of said hard disk storage devices (1-16, 17-32, ...) for each of said hard disk drive units (DAE1 ... DAE24), and
(b) a second controller which segregates a second portion of said aggregate storage volume of said data storage system into said second logical volume (514) being a second plurality of redundant arrays of independent disks - RAID - for storing a second data set (524) such that said second logical volume (514) includes said second set of said hard disk storage devices (1-16, 17-32, ...) for each of said hard disk drive units (DAE1 DAE24), wherein said first RAID set (513) and said second RAID set (515) of hard disk storage devices (1-16, 17-32, ...) are mutually exclusive, said first and second data sets (522, 524) are interleaved across said first and second RAID sets (513, 515), said hard disk drive units (DAE1 ... DAE24) and said RAID sets (513, 515) have a perpendicular relationship, and each logical volume (512, 514 has an effective bandwidth and capacity equal to the sum of the member RAID sets (513, 515).

11. The system of Claim 10, wherein said first data set (522) is striped across the first logical volume (512) and said second data set (524) is striped across the second logical volume (514).

12. The system of Claim 7 further comprising a second data storage system operatively connected to said first storage system wherein said second data storage system provides back-up storage capacity to said first data storage system.

**Patentansprüche**

1. Verfahren zum Speichern von Daten in einem Datenspeichersystem, wobei das Verfahren die Schritte umfasst:

- Bereitstellen (902) eines Datenspeichersystems (500, 600, 700, 800) mit einer Mehrzahl Festplattenlaufwerkeinheiten (DAE1 ... DAE24), wobei jede dieser Festplattenlaufwerkeinheiten (DAE1 ... DAE24) eine Mehrzahl Festplattenspeichereinrichtungen (1-16, 17-32, ...) umfasst;
- Bilden (904) eines ersten logischen Volumens (512), das aus einer ersten Mehrzahl redundanter Arrays unabhängiger Festplatten (RAID - Redundant Arrays of Independent Disks) besteht, zum Speichern eines ersten Datensatzes (522), so dass das erste logische Volumen (512) für jede der Festplattenlaufwerkeinheiten (DAE1 ... DAE24) einen ersten RAID-Satz (513) der Festplattenspeichereinrichtungen (1-16, 17-32, ...) umfasst,
- Bilden (906) eines zweiten logischen Volumens (514), das aus einer zweiten Mehrzahl redundanter Arrays unabhängiger Festplatten (RAID) besteht, zum Speichern eines zweiten Datensatzes (524), **dadurch gekenn-**

**zeichnet, dass** das zweite logische Volumen (514) für jede der Festplattenlaufwerkeihheiten (DAE1 ... DAE24) einen zweiten RAID-Satz (515) der Festplattenspeichereinrichtungen (1-16, 17-32, ...) umfasst,

- Speichern (908) des ersten Datensatzes (522) in dem ersten logischen Volumen (512), und
- Speichern (910) des zweiten Datensatzes (524) in dem zweiten logischen Volumen (514), und wobei
- der erste RAID-Satz (513) und der zweite RAID-Satz (515) der Festplattenspeichereinrichtungen (1-16, 17-32, ...) wechselseitig exklusiv sind, und wobei
- der erste und zweite Datensatz (522, 524) über den ersten und zweiten RAID-Satz (513, 515) miteinander verschachtelt sind,
- die Festplattenlaufwerkeinheiten (DAE1 ... DAE24) und die RAID-Sätze (513, 515) eine senkrechte Beziehung zueinander haben, und
- jedes logische Volumen (512, 514) eine resultierende effektive Bandbreite und Kapazität hat, die der Summe der Mitglieds-RAID-Sätze (513, 515) entspricht.

2. Verfahren nach Anspruch 1, das ferner die Schritte umfasst:

- Anordnen des ersten Satzes Festplattenspeichereinrichtungen in einem ersten redundanten Array unabhängiger Festplatten, und
- Anordnen des zweiten Satzes Festplattenspeichereinrichtungen in einem zweiten redundanten Array unabhängiger Festplatten.

3. Verfahren nach Anspruch 1,
wobei der erste Datensatz einen ersten Abschnitt mit Datenbits und einen zweiten Abschnitt mit Paritätsbits umfasst.

4. Verfahren nach Anspruch 1,
wobei der erste Datensatz Informationsbits aus einem Videostrom umfasst.

5. Verfahren nach Anspruch 1,
wobei die Festplattenspeichereinrichtungen den ersten Datensatz magnetisch, optisch oder in einem Flash-Speicher speichern.

6. Verfahren nach Anspruch 1,
wobei der erste Datensatz (522) über das erste logische Volumen (512) und der zweite Datensatz (524) über das zweite logische Volumen (514) verteilt ist.

7. Datenspeichersystem mit:

- einem Datenspeichersystem (500) mit einer Mehrzahl Festplattenlaufwerkeinheiten (DAE1 ... DAE24), wobei jede dieser Festplattenlaufwerkeinheiten (DAE1 ... DAE24) eine Mehrzahl Festplattenspeichereinrichtungen (1-16, 17-32, ...) umfasst;
- einer Steuereinrichtung (510), die einen Teil eines aggregierten Speichervolumens des Datenspeichersystems trennt in:

(a) ein erstes logisches Volumen (512), das aus einer ersten Mehrzahl redundanter Arrays unabhängiger Festplatten (RAID) besteht, zum Speichern eines ersten Datensatzes (522), so dass das erste logische Volumen (512) für jede der Festplattenlaufwerkeinheiten (DAE1 ... DAE24) einen ersten Satz der Festplattenspeichereinrichtungen (1-16, 17-32, ...) umfasst, und
(b) ein zweites logisches Volumen (514), das aus einer zweiten Mehrzahl redundanter Arrays unabhängiger Festplatten (RAID) besteht, zum Speichern eines zweiten Datensatzes (524), **dadurch gekennzeichnet, dass** das zweite logische Volumen (514) für jede der Festplattenlaufwerkeinheiten (DAE1 ... DAE24) einen zweiten RAID-Satz der Festplattenspeichereinrichtungen (1-16, 17-32, ...) umfasst,

- wobei der erste RAID-Satz (513) und der zweite RAID-Satz (515) der Festplattenspeichereinrichtungen (1-16, 17-32, ...) wechselseitig exklusiv sind,
- einer ersten Schreibschaltung zum Speichern eines ersten Datensatzes in dem ersten logischen Volumen, und
- einer zweiten Schreibschaltung zum Speichern eines zweiten Datensatzes in dem zweiten logischen Volumen, wobei
- der erste und zweite Datensatz (522, 524) über den ersten und zweiten RAID-Satz (513, 515) miteinander verschachtelt sind,

- die Festplattenlaufwerkeinheiten (DAE1 ... DAE24) und die RAID-Sätze (513, 515) eine senkrechte Beziehung zueinander haben, und
- jedes logische Volumen (512, 514) eine resultierende effektive Bandbreite und Kapazität hat, die der Summe der Mitglieds-RAID-Sätze (513, 515) entspricht.

8. System nach Anspruch 7,
wobei der erste Satz Festplattenspeichereinrichtungen ein erstes redundantes Array unabhängiger Festplatten und der zweite Satz Festplattenspeichereinrichtungen ein zweites redundantes Array unabhängiger Festplatten umfasst.

9. System nach Anspruch 7,
wobei der erste Datensatz einen ersten Abschnitt mit Datenbits und einen zweiten Abschnitt mit Paritätsbits umfasst.

10. System nach Anspruch 7, wobei die Steuereinrichtung ersetzt wird durch:

(a) eine erste Steuereinrichtung, die einen ersten Teil eines aggregierten Speichervolumens des Datenspeichersystems in ein erstes logisches Volumen (512) trennt, das aus einer ersten Mehrzahl redundanter Arrays unabhängiger Festplatten (RAID) besteht, zum Speichern eines ersten Datensatzes (522), so dass das erste logische Volumen (512) für jede der Festplattenlaufwerkeinheiten (DAE1 ... DAE24) den ersten Satz der Festplattenspeichereinrichtungen (1-16, 17-32, ...) umfasst, und
(b) eine zweite Steuereinrichtung, die einen zweiten Teil eines aggregierten Speichervolumens des Datenspeichersystems in ein zweites logisches Volumen (514) trennt, das aus einer zweiten Mehrzahl redundanter Arrays unabhängiger Festplatten (RAID) besteht, zum Speichern eines zweiten Datensatzes (524), so dass das zweite logische Volumen (514) für jede der Festplattenlaufwerkeinheiten (DAE1 ... DAE24) den zweiten Satz der Festplattenspeichereinrichtungen (1-16, 17-32, ...) umfasst,

- wobei der erste RAID-Satz (513) und der zweite RAID-Satz (515) der Festplattenspeichereinrichtungen (1-16, 17-32, ...) wechselseitig exklusiv sind,
- der erste und zweite Datensatz (522, 524) über den ersten und zweiten RAID-Satz (513, 515) miteinander verschachtelt sind,
- die Festplattenlaufwerkeinheiten (DAE1 ... DAE24) und die RAID-Sätze (513, 515) eine senkrechte Beziehung zueinander haben, und
- jedes logische Volumen (512, 514) eine effektive Bandbreite und Kapazität hat, die der Summe der Mitglieds-RAID-Sätze (513, 515) entspricht.

11. System nach Anspruch 10,
wobei der erste Datensatz (522) über das erste logische Volumen (512) und der zweite Datensatz (524) über das zweite logische Volumen (514) verteilt ist.

12. System nach Anspruch 7,
das ferner ein zweites Datenspeichersystem umfasst, das betriebsfähig mit dem ersten Speichersystem verbunden ist, wobei das zweite Datenspeichersystem dem ersten Datensystemsystem eine Backup-Speicherkapazität zur Verfügung stellt.

**Revendications**

1. Procédé de stockage de données dans un système de stockage de données, le procédé comprenant les étapes de :

prévision (902) d'un système de stockage de données (500, 600, 700, 800) ayant une pluralité d'unités de lecteurs de disques durs (DAE1 ... DAE24), chacune desquelles unités de lecteurs de disques durs (DAE1 ... DAE24) inclut une pluralité de dispositifs de stockage sur disques durs (1-16, 17-32, ...) ;
formation (904) d'un premier volume logique (512) étant une première pluralité de réseaux redondants de disques indépendants - RAID - pour stocker un premier ensemble de données (522) de telle sorte que ledit premier volume logique (512) inclut un premier ensemble RAID (513) desdits dispositifs de stockage sur disques durs (1-16, 17-32, ...) pour chacune desdites unités de lecteurs de disques durs (DAE1 ... DAE24) ;
formation (906) d'un deuxième volume logique (514) étant une deuxième pluralité de réseaux redondants de disques indépendants - RAID - pour stocker un deuxième ensemble de données (524),

**caractérisé en ce que** ledit deuxième volume logique (514) inclut un deuxième ensemble RAID (515) desdits dispositifs de stockage sur disques durs (1-16, 17-32, ...) pour chacune desdites unités de lecteurs de disques durs (DAE1 ... DAE24) ;

stockage (908) dudit premier ensemble de données (522) dans ledit premier volume logique (512) ; et

stockage (910) dudit deuxième ensemble de données (524) dans ledit deuxième volume logique (514), et dans lequel

ledit premier ensemble RAID (513) et ledit deuxième ensemble RAID (515) de dispositifs de stockage sur disques durs (1-16, 17-32, ...) sont mutuellement exclusifs, et dans lequel

lesdits premier et deuxième ensembles de données (522, 524) sont entrelacés sur lesdits premier et deuxième ensembles RAID (513, 515),

lesdites unités de lecteurs de disques durs (DAE1 ... DAE24) et lesdits ensembles RAID (513, 515) ont une relation perpendiculaire, et

chaque volume logique (512, 514) a une largeur de bande utile résultante et une capacité égale à la somme des ensembles RAID (513, 515) membres.

2. Procédé selon la revendication 1 comprenant en outre les étapes de :

agencement dudit premier ensemble de dispositifs de stockage sur disques durs en un premier réseau redondant de disques indépendants ; et

agencement dudit deuxième ensemble de dispositifs de stockage sur disques durs en un deuxième réseau redondant de disques indépendants.

3. Procédé selon la revendication 1, dans lequel ledit premier ensemble de données inclut une première partie comprenant des bits de données et une deuxième partie comprenant des bits de parité.

4. Procédé selon la revendication 1, dans lequel ledit premier ensemble de données inclut des bits d'information provenant d'un flux vidéo.

5. Procédé selon la revendication 1, dans lequel lesdits dispositifs de stockage sur disques durs stockent ledit premier ensemble de données de façon magnétique, optique ou dans une mémoire flash.

6. Procédé selon la revendication 1, dans lequel ledit premier ensemble de données (522) est disposé en bandes sur le premier volume logique (512) et ledit deuxième ensemble de données (524) est disposé en bandes sur le deuxième volume logique (514).

7. Système de stockage de données, comprenant :

un système de stockage de données (500) ayant une pluralité d'unités de lecteurs de disques durs (DAE1 ... DAE24), chacune desquelles unités de lecteurs de disques durs (DAE1 ... DAE24) inclut une pluralité de dispositifs de stockage sur disques durs (1-16, 17-32, ...) ;

un contrôleur (510) qui ségrégue une partie d'un volume de stockage agrégé dudit système de stockage de données en :

(a) un premier volume logique (512) étant une première pluralité de réseaux redondants de disques indépendants - RAID - pour stocker un premier ensemble de données (522) de telle sorte que ledit premier volume logique (512) inclut un premier ensemble desdits dispositifs de stockage sur disques durs (1-16, 17-32, ...) pour chacune desdites unités de lecteurs de disques durs (DAE1 ... DAE24), et

(b) un deuxième volume logique (514) étant une deuxième pluralité de réseaux redondants de disques indépendants - RAID - pour stocker un deuxième ensemble de données (524) **caractérisé en ce que** ledit deuxième volume logique (514) inclut un deuxième ensemble RAID desdits dispositifs de stockage sur disques durs (1-16, 17-32, ...) pour chacune desdites unités de lecteurs de disques durs (DAE1 ... DAE24),

dans lequel lesdits premier ensemble RAID (513) et deuxième ensemble RAID (515) de dispositifs de stockage sur disques durs (1-16, 17-32, ...) sont mutuellement exclusifs ;

un premier circuit d'écriture pour stocker un premier ensemble de données dans ledit premier volume logique ; et

un deuxième circuit d'écriture pour stocker un deuxième ensemble de données dans ledit deuxième volume logique ;

dans lequel

lesdits premier et deuxième ensembles de données (522, 524) sont entrelacés sur lesdits premier et deuxième ensembles RAID (513, 515),

lesdites unités de lecteurs de disques durs (DAE1 ... DAE24) et lesdits ensembles RAID (513, 515) ont une relation perpendiculaire, et

chaque volume logique (512, 514) a une largeur de bande utile résultante et une capacité égale à la somme des ensembles RAID (513, 515) membres.

8. Système selon la revendication 7, dans lequel ledit premier ensemble de dispositifs de stockage sur disques durs comprend un premier réseau redondant de disques indépendants et ledit deuxième ensemble de dispositifs de stockage sur disques durs comprend un deuxième réseau redondant de disques indépendants.

9. Système selon la revendication 7, dans lequel ledit premier ensemble de données inclut une première partie comprenant des bits de données et une deuxième partie comprenant des bits de parité.

10. Système selon la revendication 7, dans lequel ledit contrôleur est remplacé par:

(a) un premier contrôleur qui ségrége une première partie d'un volume de stockage agrégé dudit système de stockage de données en ledit premier volume logique (512) étant une première pluralité de réseaux redondants de disques indépendants - RAID - pour stocker un premier ensemble de données (522) de telle sorte que ledit premier volume logique (512) inclut ledit premier ensemble desdits dispositifs de stockage sur disques durs (1-16, 17-32, ...) pour chacune desdites unités de lecteurs de disques durs (DAE1 ... DAE24), et
(b) un deuxième contrôleur qui ségrége une deuxième partie dudit volume de stockage agrégé dudit système de stockage de données en ledit deuxième volume logique (514) étant une deuxième pluralité de réseaux redondants de disques indépendants - RAID - pour stocker un deuxième ensemble de données (524) de telle sorte que ledit deuxième volume logique (514) inclut ledit deuxième ensemble desdits dispositifs de stockage sur disques durs (1-16, 17-32, ...) pour chacune desdites unités de lecteurs de disques durs (DAE1 ... DAE24),
dans lequel ledit premier ensemble RAID (513) et ledit deuxième ensemble RAID (515) de dispositifs de stockage sur disques durs (1-16, 17-32, ...) sont mutuellement exclusifs,
lesdits premier et deuxième ensembles de données (522, 524) sont entrelacés sur lesdits premier et deuxième ensembles RAID (513, 515),
lesdites unités de lecteurs de disques durs (DAE1 ... DAE24) et lesdits ensembles RAID (513, 515) ont une relation perpendiculaire, et
chaque volume logique (512, 514) a une largeur de bande utile et une capacité égale à la somme des ensembles RAID (513, 515) membres.

11. Système selon la revendication 10, dans lequel ledit premier ensemble de données (522) est disposé en bandes sur le premier volume logique (512) et ledit deuxième ensemble de données (524) est disposé en bandes sur le deuxième volume logique (514).

12. Système selon la revendication 7 comprenant en outre un deuxième système de stockage de données opérationnellement connecté audit premier système de stockage de données dans lequel ledit deuxième système de stockage de données offre une capacité de stockage de sauvegarde audit premier système de stockage de données.

100

120

122

124

112
113
114
115
116
117

## Figure 1

PRIOR ART

251    252    253

DAE 1    DAE 2    DAE 3

QOOOOOOOOOOOOOOQ    QOOOOOOOOOOOOOOQ    QOOOOOOOOOOOOOOOQ

201    216    217    232    233    248

120

## Figure 2

PRIOR ART

Figure 3

PRIOR ART

Figure 4

PRIOR ART

Figure 5

Figure 6

Figure 7

Figure 8

Figure 9

1020

Perpendicular
Striping

DRIVE ENCLOSURE

1010

Raid (ECC
or PARITY)

PHYSICAL DRIVE

LOGICAL DRIVE

Mirroring

1030

Figure 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6895485 B
- US 20020103969 A

- US 5568629 A
- US 6275898 B